# EUROPEAN PATENT SPECIFICATION

(11) **EP 4 722 053 B1**
(45) Date of publication and mention of the grant of the patent: **09.12.2026**
(21) Application number: 24204669.6
(22) Date of filing: 04.10.2024
(51) Int. Cl.: B60T 1/10, B60T 13/66, B60T 17/22

(54) **METHOD FOR OPERATING A BRAKE SYSTEM OF A VEHICLE**
VERFAHREN ZUM BETREIBEN EINER BREMSANLAGE EINES FAHRZEUGS
PROCÉDÉ DE FONCTIONNEMENT D'UN SYSTÈME DE FREINAGE D'UN VÉHICULE

(43) Date of publication of application: 08.04.2026
(73) Proprietor: Volvo Car Corporation, 405 31 Göteborg (SE)
(72) Inventor: KORKAKAKIS, Konstantinos, 40531 Göteborg (SE); JOHANSSON, Staffan, 40531 Göteborg (SE)
(74) Representative: Kransell & Wennborg KB

(56) References cited:
- GB-A- 2 498 794
- US-B2- 10 486 674
- US-B2- 11 047 441

## Description

### TECHNICAL FIELD

The present disclosure relates to a method for operating a brake system of a vehicle, a computer program, a computer readable medium, a data processing apparatus, and a vehicle.

### BACKGROUND ART

Battery Electric Vehicles (BEVs) typically use brake systems with different types of brakes, namely friction brakes and regenerative brakes. The driver of the vehicle may request deceleration of the vehicle via the brake pedal and/or the acceleration pedal if a so-called One Pedal Drive (OPD) functionality is being used. Alternatively, when the vehicle is using an autonomous mode, such as Automatic Cruise Control (ACC), the vehicle itself may administer friction and/or regenerative braking. The deceleration request of the driver may be used as input for blended brake control, which may control which of the different types of brakes, and levels of braking of the of the different type of brakes, that are used for the deceleration.

There may be problems, particularly for BEVs, when regenerative braking is used more, and friction braking is used less. Specifically, this may result in quality issues and potentially reduced lifetime of the friction brakes due to corrosion despite the potential to have a significantly longer component lifetime due to reduced usage.

To reduce the impact of these problems, it is known to use corrosion free braking systems by using materials that are resistant to corrosion. However, such materials are cost-intensive and such braking systems may be of lower quality and cause safety related issues, such as deterioration of brake performance, noise and vibrations like judder and stiction of the friction pads on the friction discs.

Alternatively, a Disc Cleaning Function (DCF), which cleans the friction brakes or, in other words, removes the corrosion layers from the affected components by operating the friction brakes, may be employed. When using DCF, the friction brakes are used more often than required, thereby reducing the effect of said problem, but at the expense of energy efficiency since regenerative braking will be used less frequently or to a lower degree.

However, it is difficult to know when to operate the friction brakes to reduce the impact of said problems, specifically, to find an optimum between reduction of said issues and optimizing the energy efficiency. For example, fixed intervals may be used, at which the friction brakes are used. However, not only are vehicles different, but different drivers also use their vehicles differently, specifically with respect to operating the brake system. Even the same driver may show different usage behavior and further, the surrounding conditions may be different. Accordingly, with a fixed interval, for example, the friction brakes will statistically be used too often or too little, therefore either leading to corrosion on the friction brakes or to reduced energy efficiency.

Following documents US 10 486 674 B2, GB 2 498 794 A and US 11 047 441 B2 can be cited as prior art.

### SUMMARY

The problem is at least partially solved or alleviated by the subject matter of the independent claims of the present disclosure, wherein further examples are incorporated in the dependent claims.

According to a first aspect, there is provided a method for operating a brake system of a vehicle, the brake system comprising at least one friction brake, and optionally at least one regenerative brake, the method comprising:
- obtaining brake operation data indicative of a brake pressure and/or a brake torque of the at least one friction brake from at least one brake operation of the at least one friction brake,
- obtaining deviation data indicative of a deviation of the brake pressure and/or the brake torque based on the brake operation data,
- obtaining state of corrosion data indicative of a corrosion condition of the at least one friction brake based on the deviation data, and
- providing a control instruction for the brake system, the control instruction being configured to control operation of the at least one friction brake based on the state of corrosion data.

The inventors have found that because energy efficiency is increasing in importance, both regarding increased range and reduced cost, the tendency is to use as much regeneration braking by means of regenerative brakes of vehicles as possible. It is highly expected that this trend will increase in the foreseeable future. Due to consequent underusage of the friction brakes, it has been found that corrosion may build up on the friction discs and friction pads, which may result in costly quality related problems. Specifically, it has been found that friction brakes in BEVs are used as little as or even less than 10 % of the braking time. For this reason, friction brakes may have four or more times the lifetime in BEVs than in vehicles equipped with internal combustion engines. However, the lifetime may be significantly limited if corrosion builds up on the friction discs and friction pads.

The method of the first aspect of the disclosure provides for identifying or determining a state of corrosion of the at least one friction brake before operating the at least one friction brake. The identifying or determining of the state of corrosion is based on a deviation, e.g., variance, in particular, a variance over a subset of datapoints, of a brake pressure and/or brake torque of the at least one friction brake during at least one brake operation thereof. The reason for this is that it has been found that the deviation of the brake pressure and/or brake torque is strongly correlated to the corrosion condition or, in other words, corrosion state of the at least one friction brake. Hence, by obtaining, e.g., measuring and/or modeling, the brake pressure and/or brake torque and determining the deviation thereof, the state of corrosion may be very accurately determined. Based on the accurately determined state of corrosion, the operation of the at least one friction brake may be controlled, in particular with respect to at least the timing of operation or, in other words, engaging of the at least one friction brake, duration of braking, brake pressure and/or brake torque. Thereby, improved operation of the brake system is provided, in particular such that the regenerative braking can be fully, or close thereto, used, providing improved energy efficiency, but at the same time friction braking is operated more accurately and only when needed to reduce problems associated with corrosion. What herein generally is referred to as operate a brake can also be referred to as controlling the brake.

The brake pressure may be a measured and/or modeled brake pressure. The brake torque may be a measured and/or modeled brake torque. For example, the brake pressure and/or the brake torque may be directly measured by a sensor arrangement and/or modeled. For example, the brake torque may be modeled by a rate of change of speed, in particular deceleration. The state of corrosion may be indicative of a level of corrosion, e.g., as a relative value, e.g., in percentage, or as an absolute value. For example, the level of corrosion may be based on an estimated percentage of corroded surface, corroded layers and/or corroded mass of corrosion on the at least one friction brake, e.g., its friction disc and/or friction pad.

The method may be in particular, but not only, used for operating a brake system of a battery electric vehicle, a hybrid electric vehicle equipped with an internal combustion engine, an electric vehicle equipped with a fuel cell and/or similar, as long as the vehicle has a brake system comprising at least one friction brake and at least one regenerative brake. The vehicle may for example be a passenger car, van, motorcycle, truck, train and/or similar. The vehicle may be, but is not limited to be, an autonomously driven vehicle. The vehicle may have any number of friction brakes and/or regenerative brakes and the method may be used independent of the number of friction brakes and/or regenerative brakes. In particular, the vehicle may have one friction brake per wheel and at least one regenerative brake. In particular, the control instruction may be configured to operate one, multiple or all friction brakes based on the state of corrosion data, i.e., depending on which one of the friction brakes has a state of corrosion and potentially which level of corrosion the friction brakes have. Operating a brake or brake operation herein in particular means that the respective brake is engaged or applied to decelerate the vehicle. The operating of the break or brake operation however may also include releasing the brake or stopping braking.

The method of the first aspect may in particular be an at least partially or fully computer implemented method. This means that at least one, multiple or all of the steps or operations of the method may be carried out by one or more data processing apparatuses. Different steps or operations may be carried out by the same or by different data processing apparatuses or computers comprised in the data processing apparatus(es), which may carry out the steps or operations as defined by the method. The data processing apparatus(es) may be configured as, or provided inside of, one or more Control Units (CUs) of the vehicle, e.g., a control unit of the brake system, generally referred to as Braking Control System (BCU), of the vehicle, or be configured as, or provided inside, a central data processing system of the vehicle, generally referred to as core computer.

This does not exclude that steps or operations carried out by other apparatuses or devices than the data processing apparatus(es) may be part of the method. For example, for obtaining the brake operation data, in particular by the data processing apparatus, the brake pressure and/or brake torque of the at least one friction brake may be modeled and/or measured, in particular by one or more brake pressure and/or torque measurement sensors, which may provide the measurement readings to the data processing apparatus. One or both measurement readings and/or the modeled brake pressure and/or brake torque may then be used by the data processing apparatus to obtain the deviation, state of corrosion and/or threshold data, as later specified herein. Specifically, the brake pressure and/or brake torque may be used as determinants for determining the state of corrosion. By calculating the deviation of the brake pressure and/or the brake torque, the state of corrosion may be determined. The state of corrosion may indicate or estimate the severity, e.g., in terms of corroded surface, corroded layers and/or corroded mass, of corrosion on the at least one friction brake, e.g., its friction disc and/or friction pad. In particular, the brake pressure and/or brake torque (from the brake operation, e.g., measured or modeled) may be different from an actual or applied brake pressure and/or brake torque. Thus, there may be a difference between the brake pressure and/or brake torque of the brake operation data from a nominal or intended brake pressure and/or brake torque, which was chosen or defined for the at least one brake operation when e.g. measuring or modeling the brake pressure and/or brake torque.

For example, the deviation, e.g., in the form of a variance, may be any single value, number of values, function, and/or similar, which indicates a deviation of the brake pressure and/or the brake pressure from the brake operation, e.g., measured and/or modeled, in particular from a mean of the at least one brake pressure and/or brake torque. The deviation data or variance may for example be derived by computation or calculation from the brake pressure and/or the brake torque indicated by the brake operation data, e.g., by the data processing apparatus. For example, the variance may be a value of a squared deviation from the mean of the brake pressure and/or the brake torque. Alternatively, the variance or a standard deviation may be any other deviation value indicating the dispersion or spread out of the, e.g., measured and/or modeled, brake pressure and/or brake torque from an average value thereof, e.g., mean or median value thereof.

The deviation may be obtained, in particular determined, e.g., calculated, over a range or per predefined unit, e.g., time, driving distance, revolution or part of revolution of a friction disc of the at least one friction brake as further exemplary herein described, and/or similar. The deviation may in particular be calculated based on the brake pressure and/or the brake torque, in particular over the range or per predefined unit.

The state of corrosion data or the corrosion condition may for example be obtained based on a comparison of the deviation of the brake pressure and/or the brake torque, e.g., per revolution or any other unit, with a deviation threshold. The deviation threshold may be predefined such that it indicates if the state of corrosion requires cleaning of the friction disc and/or the friction pad or generally cleaning shall be done. Cleaning as used herein means that corrosion on the at least one friction brake is at least partially removed by operating the at least one friction brake. The control instruction may be configured to control operation of the at least one friction brake. Specifically, at least one piston in at least one friction brake or at least one hydraulic pressure in at least one friction brake may be controlled. As non-limiting example, the control instruction may be a data signal or computer code comprising information based on which information it is possible to control operation of a brake. For example, if the threshold is met (or not met, depending on how, and in relation to what, the threshold is set), a control instruction may be provided to operate only the at least one regenerative brake, or a combination of the regenerative and the friction brakes in a particular way, and if the threshold is not met (or met, depending on how, and in relation to what, the threshold is set), a control instruction may be provided to operate only the at least one friction brake, or another combination of the regenerative and the friction brakes. The combination, hence, mix or blend of combining regenerative and friction braking, may be dependent on the severity of the corrosion condition as indicated by the state of corrosion data. For example, the control instruction can include setting the brake pressure and/or brake torque of each one of the at least one friction brake and/or the at least one regenerative brake. The control instruction may further be based on other data or signal(s) such as, but not limited to, for example, data or signal(s) indicative of the vehicle speed, a wheel speed of the vehicle, steering angle of the vehicle, and/or similar.

In an example, the control instruction may be configured for varying the brake pressure per revolution of a friction disc of the at least one friction brake. It has been found that there are cases, e.g., with different deviations or variances in the circumferential direction of the friction disc, where only using constant pressure for cleaning the friction brake might not be optimal. Specifically, only when the deviation is constant throughout the circumference of the friction disc, a constant pressure would be beneficial or optimal. However, surface geometry deviations due to corrosion may occur different in different regions. There may be a specific region with surface geometry deviations or a single surface geometry deviation. In both of these cases, it is more optimal to apply friction braking on sub-regions of the circumference of the friction disc, and hence of varying pressure per revolution. This means that the braking pressure is not constant over the full rotation or revolution of the friction disc but varies, e.g., to have only or higher braking pressure on the specific region with surface geometry deviations or on the single surface geometry deviation. For example, a vector of variable length to quantify the brake torque and/or brake torque may be used for the specific subregion. For brake calipers that have the capacity to have different contact pressure on inner and outer friction cheek, this concept could also apply to having different friction brake cleaning applications on inner and outer cheeks of the friction disc.

In an example, the control instruction may be configured to control operation of or enable operation of or operate the at least one friction brake and/or the at least one regenerative brake based on the state of corrosion data. In particular, both, the at least one friction brake and the at least one regenerative brake may be enabled to be operated or be operated based on the control instruction. Specifically, a blending of both, friction braking and regenerative braking may be enabled by the control instruction.

In an example, the control instruction may be specifying an operation time and/or a nominal brake torque for operating at least one of the at least one friction brake and/or the at least one regenerative brake for the at least one brake operation of the brake system. In particular, the operating time and/or brake torque, in particular different from a default setting of the brake system, may be specified for blending the friction braking and the regenerative braking. In particular, the operation time and/or the nominal brake torque may be specified according to the state of corrosion data. In particular, the operation time and/or the nominal brake torque may be specified in correlation, e.g., proportional to, the corrosion state. For example, the operation time may be specified to be longer, and the nominal brake torque may be specified to be higher, for a comparatively more corroded friction brake than for a less corroded friction brake, as may be indicated by the state of corrosion data and taken into consideration for providing the control instruction. Similarly, or alternatively, the number of brake operations and/or the friction brakes being operated or parts thereof being used, may be specified in correlation to the corrosion state.

In an example, the deviation data may be indicative of the deviation, in particular variance, of the brake pressure and/or the brake torque per revolution of a friction disc of the at least one friction brake. For example, the deviation or variance of the brake pressure and/or the brake torque may be determined per partial, e.g., half, or full revolution, or per multiple revolutions of the friction disc. Using the revolutions of the friction disc as unit, the deviation or variance may be easily handled and referenced, in particular when comparing it to a threshold or as value between different friction brakes, for example. For example, groups or samples of full revolutions or rotations may be used for the deviation or variance. Thereby, a very good representation of the state of the at least one friction brake in terms of corrosion can be made when obtaining the state of corrosion data. A full revolution or rotation of the friction disc may be calculated by considering the rotational velocity, for example.

In an example, the deviation data may be indicative of an average deviation, in particular average variance, of the brake pressure and/or brake torque for multiple revolutions and/or multiple brake operations. For example, the average deviation or variance of the brake pressure and/or brake torque may be measured over multiple revolutions from one or multiple brake operations. Alternatively, for example, the average deviation or variance may be measured for a predetermined time or number of revolutions, brake operations or a combination thereof. The revolutions and/or brake operations may be either consecutive, e.g., revolutions or brake operations directly following one another, or not. By averaging the deviation or variance over multiple revolutions and/or brake operations, the deviation data may even more accurately and reliably reflect the corrosion condition and thereby the control instruction may be determined even more accurately, e.g., in terms of timing the operation of the at least one friction brake, the duration of the operation and/or the nominal brake torque to be applied when operating the at least one friction brake. The average deviation or variance may be any average of the deviation or variance, e.g., a mean variance, a median variance, an extreme value parameter describing a large or full confidence interval, and/or similar.

In an example, the control instruction may be specifying an operation time and/or a nominal brake torque for each one of at least two friction brakes of the brake system based on the state of corrosion data. In particular, a brake force ratio may be split up between the two or more friction brakes, e.g., four friction brakes (one per wheel) and/or between different axles or on the same axle, by specifying the operating or operation time and/or the nominal brake torque for each one of the friction brakes based on the state of corrosion data. For example, priority may be given to the friction brake or friction brakes having the most severe state of corrosion as indicated by the state of corrosion data compared to the ones not having corrosion or having a less severe state of corrosion. The priority may be given, e.g., by configuring the control instruction such that the prioritized friction brake or friction brakes have a longer operating time and/or larger nominal brake torque compared to the other one or more friction brakes.

In an example, the method may further comprise:
- comparing threshold data indicative of one or more of a number of drive cycles, a time, a brake torque, and a noise level from the at least one friction brake to at least one threshold,
wherein the brake operation data, the deviation data and/or the state of corrosion data are obtained if the at least one threshold is met. The noise level may in particular be relating to audible noise. In particular, the method may be at least partially initiated or continued by obtaining any one of the brake operation data, the deviation data and/or the state of corrosion data. For this initiation or continuance, a number of drive cycles and time, in particular operation time of the vehicle, the at least one friction brake and/or the at least one regenerative brake, may be considered with respect to a threshold, which may be predefined. The initiation or the continuance of the method is carried out if the threshold is met. For the threshold to be met, the value or values of the number of drive cycles, time, measured brake torque and/or noise value must approximately or exactly be equal the value or values of the threshold or exceed or go below the threshold value or values, depending on the definition of the threshold and the respective value(s) to be compared to it. The threshold may be a single value or multiple values, for one, multiple or all of the number of drive cycles, time, measured brake torque and/or noise value. The threshold may take any form, e.g., as a sum, average or separate threshold values for one, multiple or all of the number of drive cycles, time, measured brake torque and/or noise value. The values of any one of the time, measured brake torque and noise level indicated by the threshold data may be quantified over multiple drive cycles. The threshold may accordingly comprise one or more threshold values over multiple drive cycles. The threshold for the, e.g., measured and/or modeled, brake torque and/or noise value may be defined such that if the, e.g., measured and/or modeled, brake torque and/or noise value meet the threshold, an anomaly is considered to be present, which goes beyond the normal or typical operation of the vehicle. Accordingly, for example, the method may be initiated or at least continued only after a predefined number of drive cycles or a predefined time or after a certain anomaly has been detected based on the threshold. In case of the threshold data being indicative of the measured brake torque, the threshold data may be shared with or be the same as the brake operation data or only once obtained, for example. Alternatively, or additionally, however, other values may be taken for initiating the method, e.g., a charge of a traction battery of the vehicle, a speed of the vehicle, and similar. Also, the method may be based on an algorithm carrying out the steps or operations of the method, wherein the method may be initiated, e.g., by obtaining the brake operation, deviation and/or state of corrosion data, based on setting a flag for the disc cleaning function, e.g., to 1, by the algorithm, e.g., after start-up of the vehicle. The flag may be set for a single or several drive cycles of the vehicle, for example. Also, the flag may be set to deactivate the disc cleaning function or method, e.g., after carrying out disc cleaning, depending on the threshold data and/or depending on the deviation as indicated by the deviation data.

In an example, the method may be further comprising:
- operating the brake system, particularly the at least one friction brake based on the control instruction,
- repeating the obtaining of the brake operation data, the deviation data and the state of corrosion data after operating the at least one friction brake based on the control instruction, and
- providing an information indicative of a maintenance recommendation of the brake system based on the state of corrosion data.
In other words, after operating the at least one friction brake based on the control instruction once or multiple times, if the state of corrosion data is still indicative of a corrosion condition, e.g., with the same or a different threshold being used, the driver may be presented information indicative of a that maintenance is recommended. If the herein disclosed method is repeated a number of times, and the state of corrosion data still is indicative of a corrosion condition, that may indicate that another issue seems to be present, which may not be solved merely by the operation of the friction brake based on carrying out the control instruction, i.e., by using the disc cleaning function. The information may for example be presented to the driver on a display, e.g. a display of an infotainment system and/or of a driver cockpit of the vehicle.

In an example, the brake operation data may be indicative of the brake pressure and/or the brake torque of the at least one friction brake from at least one normalized brake operation of the at least one friction brake, a nominal brake pressure for the at least one friction brake in the normalized brake operation being normalized over time based on a varying pressure on a brake pedal of the vehicle provided by a driver of the vehicle. Hence, instead of using the brake operation directly based on the varying pressure on the brake pedal of the vehicle as provided by the driver, the nominal brake pressure to be applied on the at least one friction brake is normalized over time. The nominal brake pressure may be normalized such that is substantially constant or within a predefined range over time, for example. Still, as input, the brake pedal travel, movement of the brake pedal and/or the input of the brake pedal pressure as provided by the driver on the brake pedal may be used. Thereby, the at least one friction brake, in particular its disc and/or pad, may be evenly cleaned from the corrosion. This may enable more efficient use of the friction brake, still achieving sufficient cleaning or removing of corrosion, but increasing the overall energy efficiency of the vehicle.

In an example, the state of corrosion data may be obtained if the deviation of the brake pressure and/or the brake torque meets at least one threshold. This may mean that the variance exceeds, goes below, or is approximately or exactly corresponding to the at least one threshold depending on the threshold is set.

According to a second aspect, there is provided a computer program comprising instructions which, when the program is executed by a data processing apparatus, causes the data processing apparatus to carry out the method of the first aspect of this disclosure.

According to a third aspect, there is provided a computer readable medium comprising instructions which, when executed by a data processing apparatus, causes the data processing apparatus to carry out the method of the first aspect of this disclosure.

According to a fourth aspect, there is provided a data processing apparatus comprising means for carrying out the method of the first aspect of this disclosure. As previously mentioned, for example, the data processing apparatus may comprise one or more computers, computing units or, in other words, processing units. Further, as means, the data processing apparatus may comprise the computer program stored on a storage thereof or the computer readable medium.

According to a fifth aspect, there is provided a vehicle comprising the data processing apparatus of the fourth aspect. Besides this, the vehicle may of course comprise any other element described herein with respect to the vehicle, e.g., the brake system comprising the at least one friction brake and the at least one regenerative brake.

It should be noted that the above examples may be combined with each other irrespective of the aspect involved. Accordingly, the method may be combined with structural features and, likewise, the computer program, computer readable medium, data processing apparatus and the vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of a method according to an example of this disclosure;
- Figure 2: shows a schematic illustration of a vehicle according to an example of this disclosure;
- Figures 3a-3c: show a schematic illustrations of a part of a friction brake at different corrosion conditions and without corrosion;
- Figure 4: shows a three-dimensional graph based on a brake pressure measurement from brake operations of a friction brake; and
- Figure 5: shows the graph of Fig. 4 in two dimensions.

### DETAILED DESCRIPTION

The Figures are merely schematic representations and serve only to illustrate examples of the disclosure. Identical or equivalent elements are in principle provided with the same reference signs.

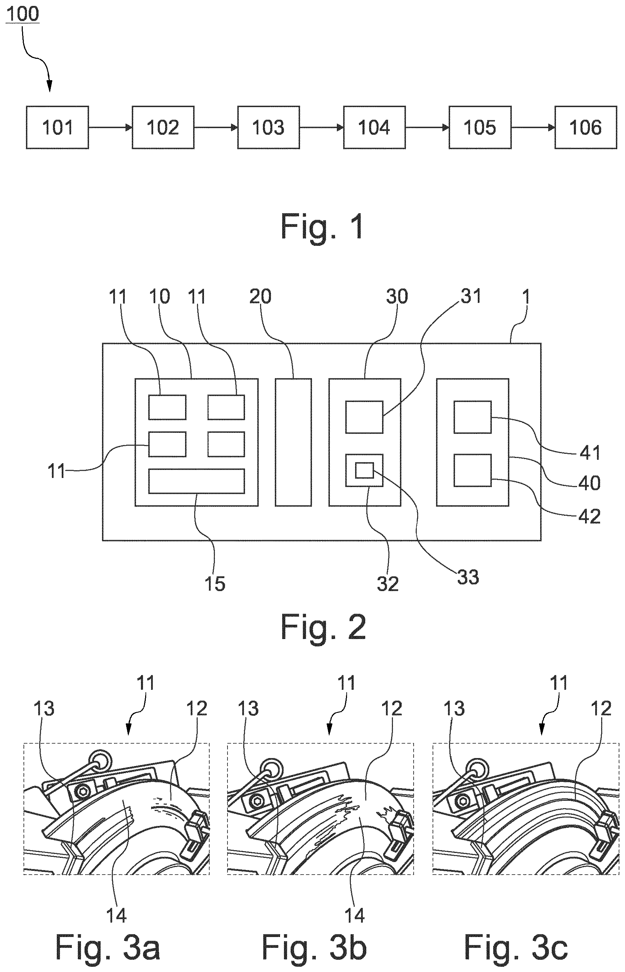

Corrosion build-up in brake systems 10 of vehicles 1 (see Fig. 2) may lead to quality and performance issues. Figure 1 shows a schematic illustration of a method 100 for operating a brake system 10 of a vehicle 1 (see Fig. 2). The method 100 as disclosed may ensure that the brake system 10 of the vehicle 1 will be sufficiently cleaned from corrosion with minimum amount of energy being used for this purpose. The energy used for this purpose is a result of that using friction brakes 11 instead regenerative brakes 15 (see Fig. 2), reduces the amount of energy that can be regenerated during braking.

In short, the method 100 determines, in particular estimates, the corrosion state of the friction brakes 11 instead of, for example, calculating energy required and energy spent for friction braking, which in most cases would be inaccurate, and uses this determination for determining a control instruction for enabling operation of the brake system 10, in particular the friction brakes 11.

Figure 2 schematically shows a vehicle 1, which may carry out the method 100. The vehicle 1 comprises a brake system 10, comprising at least one friction brake 11 and at least one regenerative brake 11. According to one example the brake system 10 comprises one friction brake 11 and one regenerative brake 15 per wheel of the vehicle 1, hence four friction brakes 11 and four regenerative brakes 15. The vehicle further comprises a propulsion system 40, in turn comprising an electrical motor 42 and a traction battery 41. The regenerative brakes 15 may be part of, or work together with the electric motor 42. During regenerative braking, the regenerative brakes 15 may, by using the electric motor 42 as a generator, utilize friction energy generated during braking to charge the traction battery 41. In this example, the vehicle 1 is configured as a battery electric vehicle and thus comprises the traction battery 41 and the electric motor 42 for propulsion thereof. The present disclosure is also applicable for hybrid vehicles, in which the propulsion system further comprises an internal combustion engine.

The vehicle 1 further comprises a sensor arrangement 20, which may comprise one or more sensors for measuring a brake pressure and/or a brake torque of one or more of the friction brakes 11 from their brake operation. Moreover, the vehicle 1 comprises a data processing apparatus 30 comprising a computer 31, a computer readable medium 32 and a computer program 33 stored on the computer readable medium 32. The computer program 33 comprises instructions which, when executed by the computer 31, cause the vehicle 1 to carry out the method 100 of Fig. 1.

In an operation 101 of method 100, threshold data indicative of one or more of a number of drive cycles, a time, a measured brake torque, and a noise level from one or more friction brakes 11 of the vehicle 1 may be obtained and compared to at least one threshold, in particular by the data processing apparatus 30. The data processing apparatus 30 or any other unit of the vehicle 1 may for example record the number of drive cycles and the drive or operation time, e.g., of the vehicle 1, of the brake system 10, or similar. For obtaining the measured brake torque, the sensor arrangement 20 may be used, which may forward the measurement to the data processing apparatus 30. The vehicle 1 may further comprise, e.g., as part of the sensor arrangement 20, an acoustic sensor for measuring the noise level from the one or more friction brakes 11 when they are being operated. When the threshold data meets the threshold, the method 100 may continue with operation 102.

In operation 102 of method 100, brake operation data indicative of a measured brake pressure and/or a measured brake torque of the one or more friction brakes 11 from at least one brake operation of the one or more friction brakes 11 is obtained, e.g., determined. For this purpose, the sensor arrangement 20 may be used, which may forward the measurements of the brake pressure and/or the brake torque to the data processing apparatus 30, which may be thereby obtained by the data processing apparatus 30. Alternatively, or additionally, the brake pressure and/or the brake torque may be modeled, e.g., by the data processing apparatus 30. Hence, any mention of a measured brake pressure and/or measured brake torque herein may alternatively or additionally relate to a modeled brake pressure and/or modeled brake torque.

The brake pressure and/or the brake torque may be dependent on a current, i.e., when braking, steering angle and/or angular velocity. The brake operation data and/or the herein mentioned deviation data may comprise steering angle and/or angular velocity data, specifically from the current braking. This may improve the accuracy of modelled or calculated brake pressure and/or brake torque.

In an operation 103 of method 100, deviation data indicative of a deviation, e.g., variance of the measured brake pressure and/or the measured brake torque is obtained, in particular determined, by the data processing apparatus 30. Specifically, the computer 31 of the data processing apparatus 30 may calculate the variance of the measured brake pressure and/or the measured brake torque.

In an operation 104 of method 100, state of corrosion data indicative of a corrosion state of the one or more friction brakes 11 may be obtained, in particular determined, based on the brake operation data and by the data processing apparatus 30. In particular, the state of corrosion data may be obtained if the deviation of the measured brake pressure and/or the measured brake torque meets at least one threshold, which may be determined by the data processing apparatus 30. In other words, the corrosion state is determined at any one of the friction brakes 11, if the threshold is met by the deviation of the measured brake pressure and/or the measured brake torque.

In an operation105 of method 100, a control instruction may be provided, e.g., determined by the data processing apparatus 30 and/or to the brake system 10, e.g., a control unit thereof. The control instruction is configured to control operation of or to operate the one or more friction brakes 11, for which the corrosion condition was determined based on the state of corrosion data being obtained. The control instruction may for example specify an operation time and/or a nominal brake torque, which may then be executed by the braking system 10, in particular a control unit thereof, for operating the one or more friction brakes 11 affected by the corrosion based on the corrosion state and, optionally, any other one of the friction brakes 11 and the regenerative brake 15 in addition. Optionally, the control instruction may also or alternatively be configured to control operation of or operate the one or more friction brakes 11 and the propulsion system 40, in particular the electric motor 42, such that the vehicle 1 substantially has a net zero acceleration or an acceleration substantially corresponding to an acceleration request based on a driver input, e.g., at an acceleration pedal of the vehicle 1.

In an operation 106 of method 100, the control instruction is carried out, thereby operating the brake system 10 to clean the one or more corroded friction brakes 11 from corrosion.

Figs. 3a to 3c show perspective views on a part of one of the friction brakes 11 at different corrosion conditions or without corrosion. In the corrosion condition shown in Fig. 3a, a relatively large corroded portion 14 or corroded surface on the friction disc 12 of the friction brake 11 is seen. Similarly, or alternatively, such corroded portion 14 may be present on the friction pad 13 of the friction disc 11 (not shown). The corrosion condition associated with the corroded portion 14 may be determined by the method 100 as described and, correspondingly, the control instruction for the brake system 10 may be carried out.

After the friction brake 11 of the brake system 10 has been operated in accordance with the control instruction, the friction brake 11 may have a less corroded portion 14 as shown in Fig. 3b, where the corroded portion 14 has been reduced compared to Fig. 3a. However, there may be still corrosion present and the method 100 may be repeated based on obtaining the brake operation data and/or the threshold data, e.g., when the audible noise level from the brake operation and/or the measured brake torque still meets the threshold and/or the state of corrosion data is still obtained, i.e., the corrosion condition is still determined to be present. Consequently, when the method 100 is repeated, the friction brake 11 may be brought to a cleaned condition without corrosion or with only little corrosion being presented, as may be seen in Fig. 3c.

However, there may be cases, where the method 100 may be repeated and the cleaning operations of the friction brake 11 may not be sufficient. In this case, e.g., when a number of repetitions of the method 100, in particular a number of control instructions, have been carried out, information indicative of a maintenance recommendation of the brake system 10 may be provided to the driver.

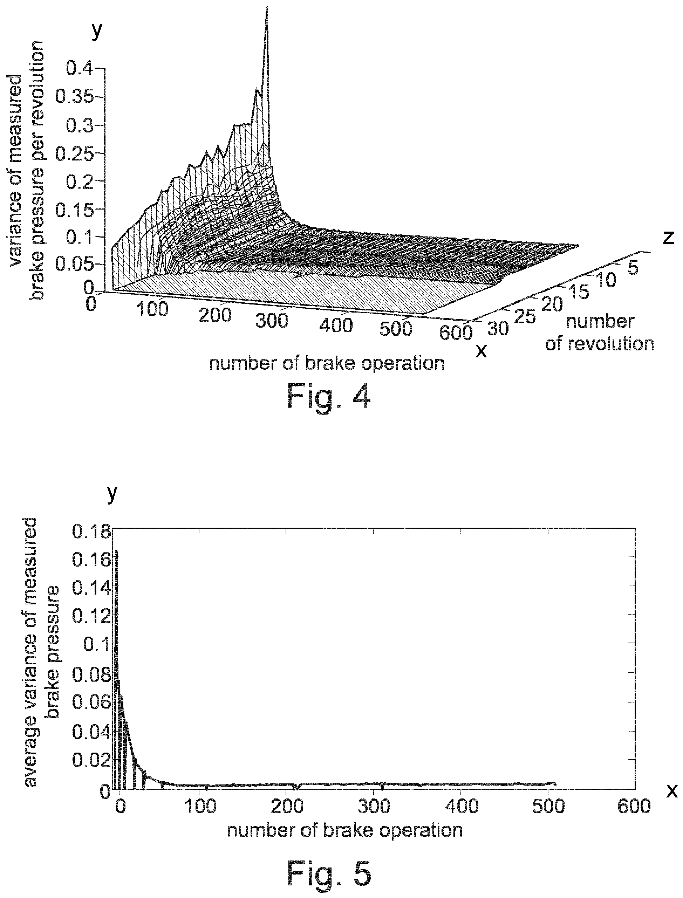

Figure 4 shows a three-dimensional graph based on a brake pressure measurement from several brake operations of a friction brake 11. As can be seem, a first axis (x) of the graph, labeled "number of brake operations", shows number of brake operations ranging from 0 to 500. A second axis (z), labeled "number of the revolution", shows number of revolutions of the friction disc 12 of the friction brake 11. A third axis (y) of the graph, labeled "variance of measured brake pressure per revolution" shows the variance of measured brake pressure per revolution of the friction disc 12, as may be indicated by the deviation data.

Figure 5 shows the same measurement data as shown in Fig. 4 but in a two dimensional graph, where one axis (x) shows the number of the brake operation and the second axis (y) shows an average, e.g., mean, variance of measured brake pressure per brake operation, which is averaged over all revolutions per brake operation. Using the average variance per revolution or groups, e.g., several, of revolutions and/or brake operation or groups, e.g., several, of brake operations allows to consider statistic data in form of the average variance, which very accurately represents the state of the friction brake, in particular friction disc and/or friction pad. Hence, determining the corrosion state, e.g., its extent or severity, may be done very accurately and thus, the disc cleaning function is only activated when needed or beneficial to increase the energy efficiency of the vehicle 1.

Both, Fig. 4, and Fig. 5 show that, when the friction brake 11 is corroded or, in other words, shows a corrosion state, the variance is the largest during the first few brake operations and decreases over the number of brake operations (and similarly for the revolutions per brake operation). Specifically, Figs. 4 and 5 show the correlation between the corrosion state and the variance, the variance being larger when the corrosion is large. Based on this, it may be very accurately determined based on the variance of the measured brake pressure and/or the measured brake torque, when and how severely the friction brake 11 is corroded in order to accurately determine that disc cleaning is required or beneficial and potentially how much friction braking shall be applied to clean the friction brake 11 or, in other words, remove the corrosion from the friction brake 11.

According to aspects of the disclosure, what herein generally is referred to as brake operation data, indicative of a brake pressure and/or brake torque, may also be referred to as first data, deviation data, indicative of a deviation, e.g. a variance, of the brake pressure and/or brake torque, may also be referred to as second data, the state of corrosion data, indicative of a state of, e.g. degree or level of, corrosion of a friction brake, may also be referred to as third data, and threshold data, indicative of one or more of a number of: drive cycles, a time, a measured brake torque, and a noise level from the at least one friction brake, may also be referred to as fourth data.

### LIST OF REFERENCE SIGNS

- 1: vehicle
- 10: brake system
- 11: friction brake
- 12: friction disc
- 13: friction pad
- 14: corroded portion
- 15: regenerative brake
- 20: sensor arrangement
- 30: data processing apparatus
- 31: computer
- 32: computer readable medium
- 33: computer program
- 40: propulsion system
- 41: traction battery
- 42: electric motor
- 100: method
- 101 - 106: operations

## Claims

1. A method (100) for operating a brake system (10) of a vehicle (1), the brake system (10) comprising at least one friction brake (11), the method (100) comprising:
- obtaining brake operation data indicative of a brake pressure and/or a brake torque of the at least one friction brake (11) from at least one brake operation of the at least one friction brake (11),
- obtaining deviation data indicative of a deviation of the brake pressure and/or the brake torque based on the brake operation data,
- obtaining state of corrosion data indicative of a state of corrosion of the at least one friction brake (11) based on the deviation data, and
- providing a control instruction for the brake system (10), the control instruction being configured to control operation of the at least one friction brake (11) based on the state of corrosion data.

2. The method (100) of claim 1, the control instruction being configured for varying the brake pressure per revolution of a friction disc (12) of the at least one friction brake (11).

3. The method (100) of any one of the previous claims, the control instruction being configured to control operation of the at least one friction brake (11) and/or at least one regenerative brake (15) of the brake system (10) based on the state of corrosion data.

4. The method (100) of claim 3, the control instruction specifying an operation time and/or a nominal brake torque for operating at least one of the at least one friction brake (11) and/or the at least one regenerative brake (15) for the at least one brake operation of the brake system (10).

5. The method (100) of any one of the previous claims, the deviation data being indicative of the deviation of the brake pressure and/or the brake torque per revolution of a friction disc (12) of the at least one friction brake (11).

6. The method (100) of claim 5, the deviation data being indicative of an average deviation of the brake pressure and/or brake torque for multiple revolutions and/or multiple brake operations.

7. The method (100) of any one of the previous claims, the control instruction specifying an operation time and/or a nominal brake torque for each one of at least two friction brakes (11) of the brake system (10) based on the state of corrosion data.

8. The method (100) of any one of the previous claims, the method (100) further comprising:
- comparing threshold data indicative of one or more of a number of drive cycles, a time, a brake torque, and a noise level from the at least one friction brake (11) to at least one threshold,
wherein the brake operation data, the deviation data and/or the state of corrosion data is obtained if the at least one threshold is met.

9. The method (100) of any one of the previous claims, the method (100) further comprising:
- operating the at least one friction brake (11) based on the control instruction,
- repeating the obtaining of the brake operation data, the deviation data and the state of corrosion data after operating the at least one friction brake (11) based on the control instruction, and
- providing an information indicative of a maintenance recommendation of the brake system (10) based on the state of corrosion data.

10. The method (100) of any one of the previous claims, the brake operation data being indicative of the brake pressure and/or the brake torque of the at least one friction brake (11) from at least one normalized brake operation of the at least one friction brake (11), a nominal brake pressure for the at least one friction brake (11) in the normalized brake operation being normalized over time based on a varying pressure on a brake pedal of the vehicle (1) provided by a driver of the vehicle (1).

11. The method (100) of any one of the previous claims, the state of corrosion data being obtained if the deviation of the brake pressure and/or the brake torque meets at least one threshold.

12. A computer program (33) comprising instructions which, when the program (33) is executed by a data processing apparatus (30), cause the data processing apparatus (30) to carry out the method (100) of any one of claims 1 to 11.

13. A computer readable medium (32) comprising instructions which, when executed by a data processing apparatus (30), cause the data processing apparatus (30) to carry out the method (100) of any one of claims 1 to 11.

14. A data processing apparatus (30) comprising means for carrying out the method (100) of any one of claims 1 to 11.

15. A vehicle (1) comprising the data processing apparatus (30) of claim 14.

## Patentansprüche

1. Verfahren (100) zum Betätigen eines Bremssystems (10) eines Fahrzeugs (1), wobei das Bremssystem (10) mindestens eine Reibungsbremse (11) umfasst, wobei das Verfahren (100) Folgendes umfasst:
- Gewinnen von Bremsbetätigungsdaten, die einen Bremsdruck und/oder ein Bremsmoment der mindestens einen Reibungsbremse (11) angeben, aus mindestens einer Bremsbetätigung der mindestens einen Reibungsbremse (11),
- Gewinnen von Abweichungsdaten, die eine Abweichung des Bremsdrucks und/oder des Bremsmoments angeben, basierend auf den Bremsbetätigungsdaten,
- Gewinnen von Korrosionszustandsdaten, die einen Korrosionszustand der mindestens einen Reibungsbremse (11) angeben, basierend auf den Abweichungsdaten, und
- Bereitstellen einer Steueranweisung für das Bremssystem (10), wobei die Steueranweisung dazu ausgelegt ist, eine Betätigung der mindestens einen Reibungsbremse (11) basierend auf den Korrosionszustandsdaten zu steuern.

2. Verfahren (100) nach Anspruch 1, wobei die Steueranweisung dazu ausgelegt ist, den Bremsdruck pro Umdrehung einer Reibscheibe (12) der mindestens einen Reibungsbremse (11) zu variieren.

3. Verfahren (100) nach einem der vorhergehenden Ansprüche, wobei die Steueranweisung dazu ausgelegt ist, eine Betätigung der mindestens einen Reibungsbremse (11) und/oder mindestens einer regenerativen Bremse (15) des Bremssystems (10) basierend auf den Korrosionszustandsdaten zu steuern.

4. Verfahren (100) nach Anspruch 3, wobei die Steueranweisung eine Betätigungszeit und/oder ein nominales Bremsmoment für eine Betätigung der mindestens einen Reibungsbremse (11) und/oder der mindestens einen regenerativen Bremse (15) für die mindestens eine Bremsbetätigung des Bremssystems (10) festlegt.

5. Verfahren (100) nach einem der vorhergehenden Ansprüche, wobei die Abweichungsdaten die Abweichung des Bremsdrucks und/oder des Bremsmoments pro Umdrehung einer Reibscheibe (12) der mindestens einen Reibungsbremse (11) angeben.

6. Verfahren (100) nach Anspruch 5, wobei die Abweichungsdaten eine durchschnittliche Abweichung des Bremsdrucks und/oder des Bremsmoments für mehrere Umdrehungen und/oder mehrere Bremsbetätigungen angeben.

7. Verfahren (100) nach einem der vorhergehenden Ansprüche, wobei die Steueranweisung eine Betätigungszeit und/oder ein nominales Bremsmoment für jede von mindestens zwei Reibungsbremsen (11) des Bremssystems (10) basierend auf den Korrosionszustandsdaten festlegt.

8. Verfahren (100) nach einem der vorhergehenden Ansprüche, wobei das Verfahren (100) ferner Folgendes umfasst:
- Vergleichen von Schwellenwertdaten, die einen oder mehrere einer Anzahl von Fahrzyklen, einer Zeit, eines Bremsmoments und eines Geräuschpegels von der mindestens einen Reibungsbremse (11) angeben, mit mindestens einem Schwellenwert,
wobei die Bremsbetätigungsdaten, die Abweichungsdaten und/oder die Korrosionszustandsdaten gewonnen werden, wenn der mindestens eine Schwellenwert erfüllt wird.

9. Verfahren (100) nach einem der vorhergehenden Ansprüche, wobei das Verfahren (100) ferner Folgendes umfasst:
- Betätigen der mindestens einen Reibungsbremse (11) basierend auf der Steueranweisung,
- Wiederholen des Gewinnens der Bremsbetätigungsdaten, der Abweichungsdaten und der Korrosionszustandsdaten nach Betätigen der mindestens einen Reibungsbremse (11) basierend auf der Steueranweisung, und
- Bereitstellen von Informationen, die eine Instandhaltungsempfehlung des Bremssystems (10) angeben, basierend auf den Korrosionszustandsdaten.

10. Verfahren (100) nach einem der vorhergehenden Ansprüche, wobei die Bremsbetätigungsdaten den Bremsdruck und/oder das Bremsmoment der mindestens einen Reibungsbremse (11) aus mindestens einer normalisierten Bremsbetätigung der mindestens einen Reibungsbremse (11) angeben, wobei ein nominaler Bremsdruck für die mindestens eine Reibungsbremse (11) bei der normalisierten Bremsbetätigung über die Zeit basierend auf einem durch einen Fahrer des Fahrzeugs (1) bereitgestellten variierenden Druck auf ein Bremspedal des Fahrzeugs (1) normalisiert wird.

11. Verfahren (100) nach einem der vorhergehenden Ansprüche, wobei die Korrosionszustandsdaten gewonnen werden, wenn die Abweichung des Bremsdrucks und/oder des Bremsmoments mindestens einen Schwellenwert erfüllt.

12. Computerprogramm (33), das Anweisungen umfasst, die, wenn das Programm (33) durch eine Datenverarbeitungseinrichtung (30) ausgeführt wird, die Datenverarbeitungseinrichtung (30) dazu veranlassen, das Verfahren (100) nach einem der Ansprüche 1 bis 11 auszuführen.

13. Computerlesbares Medium (32), das Anweisungen umfasst, die, wenn sie durch eine Datenverarbeitungseinrichtung (30) ausgeführt werden, die Datenverarbeitungseinrichtung (30) dazu veranlassen, das Verfahren (100) nach einem der Ansprüche 1 bis 11 auszuführen.

14. Datenverarbeitungseinrichtung (30), die Mittel zum Ausführen des Verfahrens (100) nach einem der Ansprüche 1 bis 11 umfasst.

15. Fahrzeug (1), das die Datenverarbeitungseinrichtung (30) nach Anspruch 14 umfasst.

## Revendications

1. Procédé (100) permettant de faire fonctionner un système de freinage (10) d'un véhicule (1), le système de freinage (10) comprenant au moins un frein à friction (11), le procédé (100) comprenant :
- l'obtention, à partir d'au moins une opération de freinage de l'au moins un frein à friction (11), de données d'opération de freinage indiquant une pression de freinage et/ou un couple de freinage de l'au moins un frein à friction (11),
- l'obtention de données d'écart indiquant un écart de la pression de freinage et/ou du couple de freinage sur la base des données d'opération de freinage,
- l'obtention de données d'état de corrosion indiquant un état de corrosion de l'au moins un frein à friction (11) sur la base des données d'écart, et
- la fourniture d'une instruction de commande pour le système de freinage (10), l'instruction de commande étant configurée pour commander le fonctionnement de l'au moins un frein à friction (11) sur la base des données d'état de corrosion.

2. Procédé (100) selon la revendication 1, l'instruction de commande étant configurée pour faire varier la pression de freinage pour chaque tour d'un disque de friction (12) de l'au moins un frein à friction (11).

3. Procédé (100) selon l'une quelconque des revendications précédentes, l'instruction de commande étant configurée pour commander le fonctionnement de l'au moins un frein à friction (11) et/ou d'au moins un frein à récupération (15) du système de freinage (10) sur la base des données d'état de corrosion.

4. Procédé (100) selon la revendication 3, l'instruction de commande spécifiant une durée de fonctionnement et/ou un couple de freinage nominal pour faire fonctionner au moins l'un de l'au moins un frein à friction (11) et/ou de l'au moins un frein à récupération (15) pour l'au moins une opération de freinage du système de freinage (10).

5. Procédé (100) selon l'une quelconque des revendications précédentes, les données d'écart indiquant l'écart de la pression de freinage et/ou du couple de freinage pour chaque tour d'un disque de friction (12) de l'au moins un frein à friction (11).

6. Procédé (100) selon la revendication 5, les données d'écart indiquant un écart moyen de la pression de freinage et/ou du couple de freinage sur des tours multiples et/ou des opérations de freinage multiples.

7. Procédé (100) selon l'une quelconque des revendications précédentes, l'instruction de commande spécifiant une durée de fonctionnement et/ou un couple de freinage nominal pour chacun d'au moins deux freins à friction (11) du système de freinage (10) sur la base des données d'état de corrosion.

8. Procédé (100) selon l'une quelconque des revendications précédentes, le procédé (100) comprenant en outre :
- la comparaison, à au moins un seuil, de données de seuil indiquant un ou plusieurs éléments parmi un nombre de cycles de conduite, une durée, un couple de freinage et un niveau de bruit provenant de l'au moins un frein à friction (11),
dans lequel les données d'opération de freinage, les données d'écart et/ou les données d'état de corrosion sont obtenues si l'au moins un seuil est atteint.

9. Procédé (100) selon l'une quelconque des revendications précédentes, le procédé (100) comprenant en outre :
- l'actionnement de l'au moins un frein à friction (11) sur la base de l'instruction de commande,
- la répétition de l'obtention des données d'opération de freinage, des données d'écart et des données d'état de corrosion après l'actionnement de l'au moins un frein à friction (11) sur la base de l'instruction de commande, et
- la fourniture d'une information indiquant une recommandation de maintenance du système de freinage (10) sur la base des données d'état de corrosion.

10. Procédé (100) selon l'une quelconque des revendications précédentes, les données d'opération de freinage indiquant la pression de freinage et/ou le couple de freinage de l'au moins un frein à friction (11) à partir d'au moins une opération de freinage normalisée de l'au moins un frein à friction (11), une pression de freinage nominale pour l'au moins un frein à friction (11) lors de l'opération de freinage normalisée étant normalisée au cours du temps sur la base d'une pression variable exercée sur une pédale de frein du véhicule (1) par un conducteur du véhicule (1).

11. Procédé (100) selon l'une quelconque des revendications précédentes, les données d'état de corrosion étant obtenues si l'écart de la pression de freinage et/ou du couple de freinage atteint au moins un seuil.

12. Programme d'ordinateur (33) comprenant des instructions qui, lorsque le programme (33) est exécuté par un appareil de traitement de données (30), amènent l'appareil de traitement de données (30) à mettre en œuvre le procédé (100) selon l'une quelconque des revendications 1 à 11.

13. Support lisible par ordinateur (32) comprenant des instructions qui, lorsqu'elles sont exécutées par un appareil de traitement de données (30), amènent l'appareil de traitement de données (30) à mettre en œuvre le procédé (100) selon l'une quelconque des revendications 1 à 11.

14. Appareil de traitement de données (30) comprenant des moyens pour mettre en œuvre le procédé (100) selon l'une quelconque des revendications 1 à 11.

15. Véhicule (1) comprenant l'appareil de traitement de données (30) selon la revendication 14.
